# EUROPEAN PATENT APPLICATION

(11) **EP 2 213 155 A1**
(43) Date of publication of application: **04.08.2010**
(21) Application number: 10152303.3
(22) Date of filing: 01.02.2010
(51) Int. Cl.: A01C 23/02

(54) **Fertilizer injecting pin**

(30) Priority: 02.02.2009 NL 2002474
(71) Applicant: Benedict Technische Handelsonderneming, 7274 EG Geesteren (NL)
(72) Inventor: Benedict, Andreas Pál, 7274 EG, Geesteren (NL)
(74) Representative: Haan, Raimond

(57) **Abstract**

The invention relates to a an injecting pin (18, 19, 23) for injecting at least more or less liquid fertilizer into the ground, which pin comprises: a tubular middle part (2), a threaded part (3) with a flange (5) connecting upstream to this middle part (2), a feed tube stub (6) connecting upstream to this threaded part (3), a head (8) which connects downstream to the middle part (2) and narrows toward the free end, and the upstream end of which has a greater width than the middle part (2), and a central longitudinal channel (10) which extends in longitudinal direction of the pin (18, 19) and the inlet opening (11) of which is the mouth opening of the tube stub (6) and the outlet opening (12) of which is situated in the outer surface (13) of the middle part (2) a short distance above the upstream end (9) of the head (8), wherein the middle part (2), the threaded part (3) and the head (8) together form a monolithic unit.

## Description

The invention relates to an injecting pin for injecting liquid fertilizer into the ground, which pin comprises:
a tubular middle part,
a threaded part with a flange connecting upstream to this middle part;
a feed tube stub connecting upstream to this threaded part;
a head which connects downstream to the middle part and narrows toward the free end, and the upstream end of which has a greater width than the middle part; and
a central longitudinal channel which extends in longitudinal direction of the pin and the inlet opening of which is the mouth opening of the tube stub and the outlet opening of which is situated in the outer surface of the middle part a short distance above the upstream end of the head.

Such an injecting pin is known. It is used, together with a number of the same or at least functionally corresponding injecting pins, as attachment of a hollow, rotatable fertilizer dispensing disc through which the liquid fertilizer can flow and which has a peripheral casing in which a peripheral rim of openings is arranged in which the injecting pins can be secured such that the injecting pins protrude substantially in radial direction from the fertilizer dispensing disc. When liquid fertilizer is fed with some pressure to the disc, and so to the injecting pins, fertilizer is effectively injected into the ground when the disc is rolled over the ground in that the injecting pins make holes in the ground and thus inject the liquid fertilizer at a desired depth into the ground.

Such a system is known from, among others, the American company SpikeWheel.

During use of known injecting pins the wear of the pins is so great that improvement is desirable. It can be stated by way of orientation that, after fertilizing an area of for instance 2500 hectares of sandy soil, the known injecting pins are worn out.

It is an object of the invention to provide an injecting pin which at least partially obviates one or more problems of prior art injecting pins, and which particularly displays considerably less wear, whereby a substantially larger area can be fertilized before replacement of the injecting pins is necessary.

Known injecting pins consist of four separate parts, i.e. said middle part, threaded part, head and tube stub. The middle part, the threaded part and the head are connected to each other by two weld connections. The tube stub is placed in suitable manner, in particular by means of a press fit, into an outer zone of the threaded part such that the longitudinal channel is formed by the longitudinal cavity in the tube stub, the longitudinal channel in the threaded part and the longitudinal channel in the middle part, wherein the longitudinal channel of the middle part ends at the solid head and connects in that area to said transverse channel such that during operation the liquid fertilizer is delivered through this transverse channel in lateral direction relative to the longitudinal direction of the injecting pin.

According to a first basic aspect of the invention, the injecting pin is embodied such that the middle part, the threaded part and the head together form a monolithic unit.

In a preferred embodiment the injecting pin has the special feature that the tube stub also forms part of the monolithic unit.

According to yet another aspect of the invention, the injecting pin of the above described type has the special feature that the monolithic unit is manufactured by a method comprising the following steps, performed in suitable sequence, of:
(a) casting molten casting steel in a mould, for instance on the basis of the lost wax method;
(b) removing the raw casting from the mould after cooling;
(c) modelling the outer form of the monolithic unit by milling, filing, grinding, spark machining and/or other suitable process;
(d) arranging the longitudinal channel and the transverse channel by drilling, spark machining or other suitable process; and
(e) optionally hardening the thus obtained monolithic unit.

The monolithic embodiment of the injecting pin already makes a substantial contribution toward lengthening the effective tool life of the injecting pin. This is because the welded zones between the middle part, the threaded part and the head are eliminated, and two potential sources of failure are thereby also removed. Heads which have broken off or been lost, possibly together with the shank-like middle parts of the prior art can moreover cause damage to livestock and to farm machinery. This problem is also almost completely eliminated according to the invention.

Still further improvement is obtained through the use of casting steel, particularly in combination with a hardening treatment once the basic injecting pin has been made.

In this latter respect an embodiment is particularly important in which the monolithic unit has a hardness of at least 55 Rockwell, preferably at least 60 Rockwell, still more preferably about 64 Rockwell.

For the purpose of good operation of the above described casting process, the injecting pin can advantageously have the special feature that the middle part has a conical form with a half apex angle in the range of about 0.5° and 5°. The conical form also provides a periphery of the middle part which increases from the head in the direction of the flange, whereby this middle part is strengthened. Experimental use has been made of a pin with a half apex angle of about 1°.

According to a further preferred embodiment, the middle part of the monolithic unit comprises an elliptical cross-section in longitudinal direction. This makes it possible to strengthen the middle part with extra material, while in one direction - for instance the direction transversely of the direction of movement of the fertilizer dispensing disc on which the injecting pins are mounted - the cross-section can retain a constant size, thereby having a minimal impact in this constant direction on the soil to be injected.

According to another further preferred embodiment, the elliptical cross-section is oriented for this purpose such that the long axis of the elliptical cross-section is oriented substantially transversely of the flow direction of the transverse channel, and the short axis of the elliptical cross-section is oriented substantially in the flow direction of the transverse channel.

According to yet another preferred embodiment, the length of the long axis of the elliptical cross-section of the middle part increases steplessly in longitudinal direction thereof from the head in the direction of the flange, while the length of the short axis of the elliptical cross-section remains unchanged. The elliptical cross-section can hereby be combined with the conical form of the middle part as described above.

According to yet another further preferred embodiment, the length variation of the long axis of the ellipse provides a conical form with a half apex angle in the range of about 0.5° and 5°.

The invention will now be elucidated with reference to the accompanying drawings.

In the drawings:
figure 1 is a perspective view of a prior art injecting pin;
figure 2 is a side view of the injecting pin according to figure 1;
figure 3 shows the longitudinal section III-III of figure 2;
figure 4 shows a perspective view corresponding to figure 1 of an injecting pin in a first embodiment of the invention;
figure 5 shows a side view corresponding to figure 2 of the pin according to figure 4;
figure 6 shows the longitudinal section VI-VI of figure 5;
figure 7 shows a view corresponding to figures 1 and 4 of an injecting pin in a second embodiment of the invention;
figure 8 is a side view of the injecting pin according to figure 7;
figure 9 shows the longitudinal section IX-IX of figure 8;
figure 10 shows a view corresponding to figures 1, 4 and 7 of an injecting pin in a third embodiment of the invention;
figure 11 is a side view of the injecting pin according to figure 10; and
figure 12 shows the longitudinal section XI-XI of figure 11.

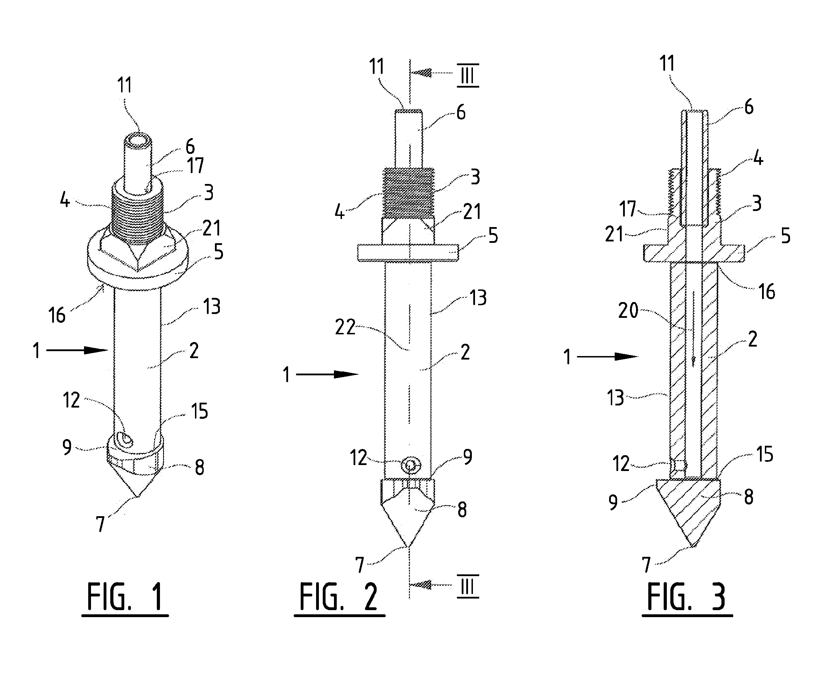

Figures 1, 2 and 3 show a prior art injecting pin 1. As shown particularly clearly in figure 3, injecting pin 1 is assembled from the following mutually coupled parts: a tubular middle part 2, a threaded part 3 connecting upstream to this middle part with an external screw thread 4 and a flange 5, a feed tube stub 6 connecting upstream to this threaded part 3, a head 8 which connects downstream to middle part 2 and narrows toward the free end 7, and the upstream end 9 of which has a greater width than middle part 2, and a central longitudinal channel 10 which extends in longitudinal direction of the pin and inlet opening 11 of which is the mouth opening of tube stub 6 and outlet opening 12 of which is situated in the outer surface 13 of middle part 2 a short distance above the upstream end 9 of head 8, which outlet opening 12 connects via a transverse channel 14 to longitudinal channel 10.

Head 8 is connected to middle part 2 over a welded zone 15. Middle part 2 is connected to threaded part 3 via a weld zone 16. Tube stub 6 is connected by means of a press fit to a widened upper zone 17 of the central longitudinal channel 10 in threaded part 3 in a manner such that there is no noticeable transition between the parts of longitudinal channel 10 in respectively tube stub 6, threaded part 3 and middle part 2.

The weld zones 15 and 16 are particularly important for the above discussed basic principle of the invention.

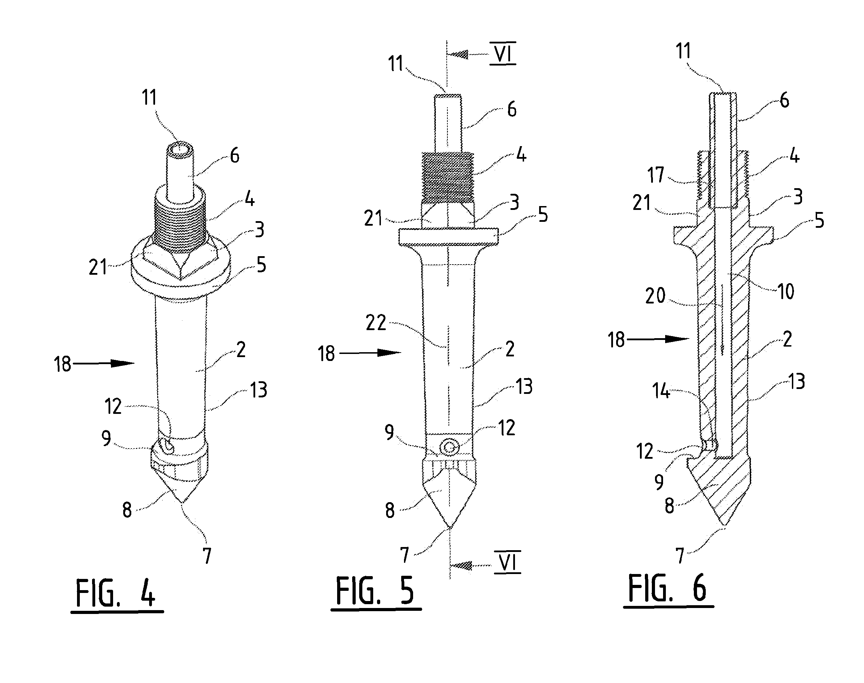

Figures 4, 5 and 6 show an injecting pin 18 according to the invention which is distinguished from injecting pin 1 according to figures 1, 2 and 3 particularly by the absence of the crucial weld zones 15 and 16. Figure 6 shows particularly clearly that middle part 2, threaded part 3 and head 8 together form a monolithic unit.

This monolithic unit is manufactured from casting steel on the basis of the lost wax method and, after a suitable further modelling, is hardened to a hardness of about 64 Rockwell.

In respect of this casting method the middle part 2 has in this embodiment a conical form with a half apex angle of about 1°. This conical form also provides a periphery of middle part 2 which increases from head 8 in the direction of flange 5, thereby strengthening this middle part 2.

As in the case of injecting pin 1, injecting pin 18 has a separate tube stub which is later inserted clampingly by means of a press fit into the widened upper zone 17 of threaded part 3.

It is otherwise noted that when the soil is penetrated by injecting pin 18 the head 8, which connects downstream to middle part 2 and narrows toward the free end and the upstream end 9 of which has a greater width than middle part 2, displaces this soil some distance from the outer surface 13 of middle part 2 due to the greater width of the upstream end 9 at the position of outlet opening 12, whereby this thickened portion prevents contact between outlet opening 12 and the soil, and thereby also blockage of this outlet opening 12 by the entry of soil. This is particularly relevant when outlet opening 12 is directed laterally during use, as is the case in the present invention, i.e. transversely of the direction of movement of the fertilizer dispensing disc on which the injecting pin is arranged during use.

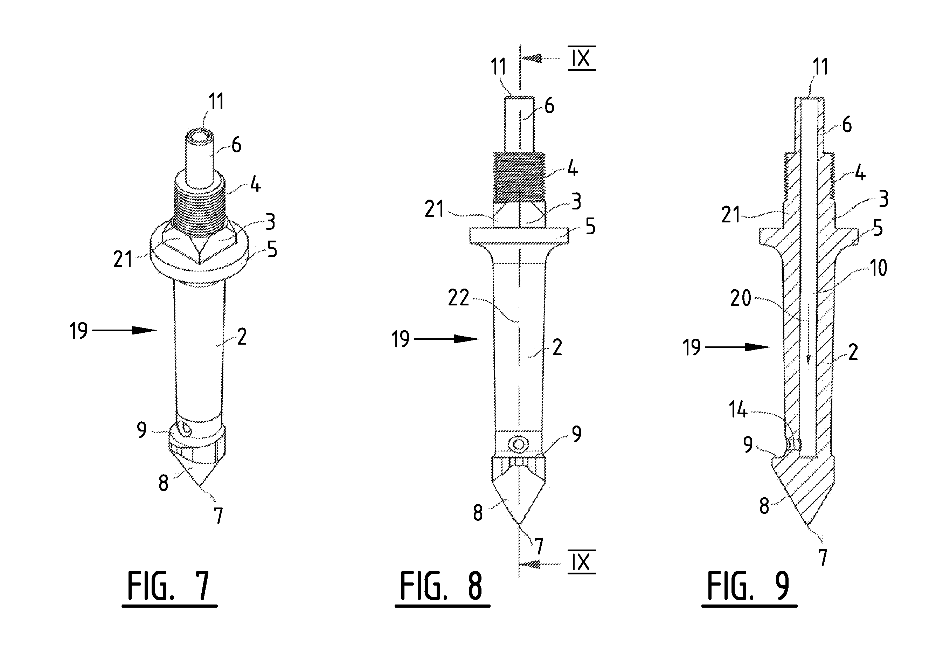

Figures 7, 8 and 9 show a second embodiment of the injecting pin according to the invention. This is distinguished from injecting pin 18 according to figures 4, 5 and 6 in the sense that tube stub 6 is not a separate component connected later to the monolithic unit 2, 3, 8, but forms part thereof.

Pin 19 is otherwise identical to pin 18.

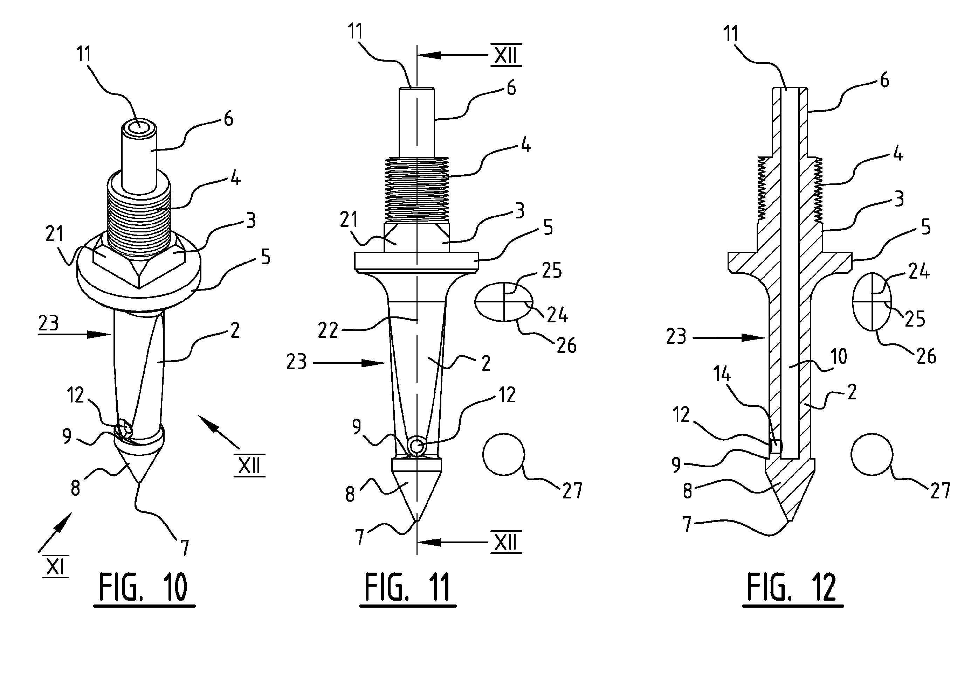

Figures 10, 11 and 12 show a third embodiment of the injecting pin according to the invention. This injecting pin 23 is distinguished from injecting pins 18, 19 according to the first and second embodiments in that the middle part 2 of the monolithic unit comprises an elliptical cross-section in longitudinal direction.

It is noted that an ellipse is a curved line connecting all points in a plane, the sum of its distances from two fixed points in the plane being constant.

The two fixed points from which the sum is determined are the foci of the ellipse. The line of symmetry running through the foci of the ellipse forms a long axis 24 of the ellipse.

The centre of the ellipse is situated in the centre between the foci. Situated here at right angles to long axis 24 is a line of symmetry forming a short axis 25 of the ellipse.

The ellipse thus has two lines of symmetry disposed at right angles, forming a long axis 24 and a short axis 25 of the ellipse.

Long axis 24 of the elliptical cross-section is oriented substantially transversely of the flow direction of transverse channel 14, while short axis 25 of the elliptical cross-section is oriented substantially in the flow direction of transverse channel 14.

It is noted that the cross-section is at least elliptical close to flange 5, but can have transposed to a circular form close to the upstream end 9 of head 8. This effect can occur in that the length of long axis 24 of the ellipse increases steplessly in longitudinal direction of the middle part from head 8 in the direction of flange 5 (as can be seen in figure 11), while the length of short axis 25 of the ellipse remains unchanged. The conical form of middle part 2 is not visible in the view of figure 12. Where the length of the 'long' axis 24 and the 'short' axis 25 become approximately equal to each other, the elliptical cross-section 26 transposes into a circular cross-section 27, shown schematically adjacently of injecting pin 23 in figures 11 and 12.

This elliptical cross-section 26, 27 is oriented such that - in side view of injecting pin 23 (as shown in for instance figure 11) - the conical form of middle part 2 is visible. Conversely, the conical form of middle part 2 is not visible in the front and rear view of injecting pin 23 as shown in figure 12.

In addition, middle part 2 of injecting pin 23, with an overall length of about 110 mm, is somewhat shorter than middle parts 2 of injecting pins 18 and 19, which have a typical overall length of about 130 mm. A shorter pin has the advantage that it has less impact on the soil. Because the pin is pressed by the fertilizer dispensing disc into the ground pointing obliquely forward in the direction of movement, then injects fertilizer in its substantially vertical position and is subsequently pulled out of the soil pointing obliquely to the rear as seen in the direction of movement, each injecting pin 18, 19, 23 makes an oval, sliced cut in the ground. With a shorter pin this cut has smaller dimensions and advantageously thereby has less impact on the root structures present in the soil.

Injecting pin 23 is particularly suitable for sports fields, including golf courses, among other reasons because the root structure is generally located less deeply than is the case in meadowland, and so the distance between flange 5 and outlet opening 12 can be smaller, and a shorter injecting pin can thus suffice. As described in the previous paragraph, not only is outlet opening 12 placed closer to the flange, the whole injecting pin is shortened in order to reduce the impact on the root structures present in the soil to a minimum.

The elliptical cross-section allows, with the same strength, a narrower pin as seen transversely of the direction of movement of the fertilizer dispensing disc, since the short axis of the ellipse is oriented in this direction transversely of the direction of movement. The strength of the middle part remains the same because the length of the long axis of the ellipse, which is oriented in the direction of movement, is greater.

Pin 23 is otherwise identical to pins 18 and 19.

Tests have demonstrated that the injecting pin according to the invention has a substantially longer tool life than prior art pin 1.

The above-mentioned terms 'upstream' and 'downstream' are defined in relation to the direction of flow of the liquid fertilizer through longitudinal channel 10 indicated with an arrow 20.

It is noted that the figures are drawn substantially to the scale 1 : 1. It may also be noted here that the central axis of transverse channel 14 is located at a distance from the upstream end 9 of head 8 measured in axial direction of a value in the order of 2-4 mm.

Attention is finally drawn to the fact that placing and removal of an injecting pin 1, 18 or 19 takes place by means of screw thread 4, which co-acts with the internal screw thread of a nut (not shown) which, via a ring which is likewise not shown, secures pin 1 from the inside in a square hole in the peripheral casing of said fertilizer dispensing disc. Flange 5 presses against the casing on the outer side of this casing. The square widened part 21 shown in the figures, which forms part of threaded part 3 and, according to the invention, of the described monolithic unit, fits into the square hole such that pin 18, 19 is locked against rotation around its axis 22.

Although they show preferred embodiments of the invention, the above described embodiments are intended only to illustrate the present invention and not in any way to limit the specification of the invention. It is particularly noted that the skilled person can combine technical measures of the different embodiments. The scope of the invention is therefore defined solely by the following claims.

## Claims

1. Injecting pin (18, 19, 23) for injecting at least more or less liquid fertilizer into the ground, which pin comprises:
- a tubular middle part (2);
- a threaded part (3) with a flange (5) connecting upstream to this middle part (2);
- a feed tube stub (6) connecting upstream to this threaded part (3);
- a head (8) which connects downstream to the middle part (2) and narrows toward the free end, and the upstream end of which has a greater width than the middle part (2);
- a central longitudinal channel (10) which extends in longitudinal direction of the pin (18, 19) and the inlet opening (11) of which is the mouth opening of the tube stub (6) and the outlet opening (12) of which is situated in the outer surface (13) of the middle part (2) a short distance above the upstream end (9) of the head (8); and
- wherein the middle part (2), the threaded part (3) and the head (8) together form a monolithic unit.

2. Injecting pin as claimed in claim 1, wherein the tube stub (6) also forms part of the monolithic unit.

3. Injecting pin as claimed in any of the foregoing claims, wherein the monolithic unit is manufactured by a method comprising the following steps, performed in suitable sequence, of:
(a) casting molten casting steel in a mould, for instance on the basis of the lost wax method;
(b) removing the raw casting from the mould after cooling;
(c) modelling the outer form of the monolithic unit by milling, filing, grinding, spark machining and/or other suitable process;
(d) arranging the longitudinal channel (10) and the transverse channel (14) by drilling, spark machining or other suitable process; and
(e) optionally hardening the thus obtained monolithic unit.

4. Injecting pin as claimed in any of the foregoing claims, wherein the monolithic unit has a hardness of at least 55 Rockwell, preferably at least 60 Rockwell, still more preferably about 64 Rockwell.

5. Injecting pin as claimed in any of the foregoing claims, wherein the middle part (2) has a conical form with a half apex angle in the range of about 0.5° and 5°.

6. Injecting pin as claimed in any of the foregoing claims, wherein the central axis of the transverse channel (14) is located at a distance from the upstream end (9) of the head (8) measured in axial direction of a value in the order of 2-4 mm.

7. Injecting pin (23) as claimed in any of the foregoing claims, wherein the middle part (2) of the monolithic unit comprises an elliptical cross-section in longitudinal direction.

8. Injecting pin (23) as claimed in claim 7, wherein the elliptical cross-section is oriented such that the long axis (24) of the elliptical cross-section is oriented substantially transversely of the flow direction of the transverse channel (14), and the short axis (25) of the elliptical cross-section is oriented substantially in the flow direction of the transverse channel (14).

9. Injecting pin (23) as claimed in claim 8, wherein the length of the long axis (24) of the elliptical cross-section of the middle part (2) increases in longitudinal direction thereof from the head (8) in the direction of the flange (5), while the length of the short axis (25) of the elliptical cross-section remains unchanged.

10. Injecting pin (23) as claimed in any of the claims 7-9, wherein the length variation of the long axis (24) of the ellipse provides a conical form with a half apex angle in the range of about 0.5° and 5°.
